(19) Europäisches Patentamt
European Patent Office
Office européen des brevets

(11) Veröffentlichungsnummer: **0 306 604**
**A1**

(12) **EUROPÄISCHE PATENTANMELDUNG**

(21) Anmeldenummer: 88105813.5

(22) Anmeldetag: 13.08.82

(51) Int. Cl.⁴: **G02B 26/02 , G02F 1/29 , G02F 1/17 , G02F 1/01**

(30) Priorität: 30.09.81 DE 3138968

(43) Veröffentlichungstag der Anmeldung:
15.03.89 Patentblatt 89/11

(60) Veröffentlichungsnummer der früheren Anmeldung nach Art. 76 EPÜ: **0 075 704**

(84) Benannte Vertragsstaaten:
**FR GB**

(71) Anmelder: **Siemens Aktiengesellschaft Berlin und München**
**Wittelsbacherplatz 2**
**D-8000 München 2(DE)**

(72) Erfinder: **Auracher, Franz, Dr. Dipl.-Phys.**
**Eichenstrasse 26**
**D-8021 Baierbrunn(DE)**
Erfinder: **Bürk, Hermann**
**Winkler Weg 5**
**D-8901 Egling a.d. Paar(DE)**
Erfinder: **Keil, Rudolf, Dr. Dipl.-Ing.**
**Pulverturmstrasse 27a**
**D-8000 München 45(DE)**
Erfinder: **Stockmann, Michael, Dipl.-Phys.**
**Enzianweg 18**
**D-8206 Bruckmühl-Götting(DE)**
Erfinder: **Weingand, Kaspar, Dr. rer. nat.**
**Mooshölzlweg 1**
**D-8184 Dürnbach(DE)**
Erfinder: **Zeitler, Karl-Heinz**
**Urbanstrasse 22/2**
**D-8000 München 70(DE)**

(54) Optische Steuervorrichtung zum Steuern der in einem optischen Wellenleiter geführten Strahlung, insbesondere optische Schalter.

(57) Es werden optische Ein-/Ausschalter bzw. Umschalter mit Glasfasern beschrieben, bei denen eine mechanische Beanspruchung der Faser vermieden wird, und die weitgehend in Planartechnik hergestellt werden können. Der Schaltvorgang wird durch Verschieben eines Flüssigkeitstropfens in einem Spalt zwischen fluchtenden Glasfasern erreicht, der wahlweise durch elektrische, magnetische oder mechanische Kräfte in den Spalt bewegt wird. Bei einem Umschalter wird das Licht durch eine immertierende Flüssigkeit in der durchgehenden Faserstrecke geführt bzw. ohne Immersion in die abzweigende Faser reflektiert. Die Umschaltung zwischen Transmission und Reflexion kann auch durch zwei nicht mischbare Flüssigkeiten mit unterschiedlichem Brechungsindex erfolgen. Der Schaltvorgang kann auch durch ein Medium erreicht werden, das auf elektrochemischem Wege im Spalt erzeugt wird, oder zum Verschwinden gebracht wird, oder auch durch ein Medium, dessen optisches Transmissionsverhalten elektrisch magnetisch oder thermisch gesteuert werden kann. Die Schalter haben den Vorteil, daß mechanische Beanspruchungen der Faser weitgehend vermieden sind und daß sie in Planartechnik herstellbar sind, wodurch ganze Schalterzeilen ohne größeren Mehraufwand realisierbar sind.

FIG 2

## Optische Steuervorrichtung zum Steuern der in einem optischen Wellenleiter geführten Strahlung, insbesondere optische Schalter

Die Erfindung bezieht sich auf eine optische Steuervorrichtung zum Steuern der in einem optischen Wellenletier geführten Strahlung, insbesondere auf optische Schalter.

In der optischen Nachrichtentechnik mit Glasfasern sind Faservielfachschalter von großem Interesse. Bisher sind hauptsächlich mechanische Faserschalter entwickelt worden, bei denen die eingangsseitige Faser verbogen und dadurch wahlweise mit einer von zwei Ausgangsfasern in optischen Kontakt gebracht wird. Die Herstellung derartiger Fasern ist meist relativ aufwendig und sie lassen sich nicht einfach zu einer Schalterzeile integrieren. Außerdem ist die mechanische Beanspruchung der Faser ungünstig.

Die Aufgabe der Erfindung besteht darin, eine optische Steuervorrichtung, insbesondere optische Schalter, der genannten Art anzugeben, bei denen eine mechanische Beanspruchung von Wellenleitern vermieden wird und die weitgehend in Planartechnik hergestellt werden können.

Diese Aufgabe wird durch die im kennzeichnenden Teil des Patentanspruchs 1 angegebenen Merkmale gelöst.

Das Medium kann vorteilhafterweise eine Flüssigkeit sein, die durch mechanische, elektrische oder magnetische Kräfte bewegt wird (Ansprüche 2 bis 12), es kann vorteilhafterweise auch ein in dem Strahlengang ge steuert erzeugter und wieder zum Verschwinden gebrachter absorbierender oder reflektierender Stoff sein (Ansprüche 13 bis 15); es kann aber auch vorteilhafterweise ein in dem Strahlengang angeordnetes Medium sein, dessen optisches Transmissionsverhalten elektrisch, magentisch oder thermisch steuerbar ist (Ansprüche 16 bis 18). Diese drei genannten Möglichkeiten sind in der Regel schnell steuerbar, insbesondere umsteuerbar, so daß sie hervorragend für Schalter geeignet sind. Ein wesentlicher Teil der Erfindung ist deshalb auf die konstruktive Ausbildung derartiger Schalter gerichtet, wobei alle drei genannten Schaltprinzipien zur Anwendung kommen. Die wesentlichen Konstruktionsmerkmale solcher Schalter gehen aus den Ansprüchen 19 bis 38 hervor.

Da bei diesen Schaltern keine mechanische Verbiegung einer Faser mehr nötig ist, wird die Lebensdauer dieser Schalter gegenüber mechanischen Faserschaltern wesentlich erhöht. Ein ganz wesentlicher Vorteil liegt auch darin, daß sie in Planartechnik hergestellt werden können, so daß ohne wesentlichen Mehraufwand sehr viele Einzelschalter gleichzeitig in einer Schalterzeile hergestellt werden können.

Die Erfindung wird anhand von zahlreichen Ausführungsformen von Schaltern, die in den Figuren schematisch dargestellt sind, in der folgenden Beschreibung näher erläutert. Von den Figuren zeigen:

Figur 1 in Längsschnitt einen Ein-/Ausschalter mit einem aus einem Flüssigkeitstropfen bestehenden Schaltelement im eingeschalteten Zustand,

Figur 2 den Schalter nach Figur 1 im ausgeschalteten Zustand,

Figur 3 im Längsschnitt einen Umschalter mit einem aus einem Flüssigkeitstropfen bestehenden Schaltelement in einem Schaltzustand, in dem auf eine abzweigende Faser geschaltet ist,

Figur 4 den Schalter gemäß Figur 3 in einem Schaltzustand, in dem auf eine weiterführende fluchtende Faser geschaltet ist,

Figur 5a, b im Längs- bzw. Querschnitt eine elektrostatisch geschaltete Ausführungsform eines Ein-/Ausschalters nach den Figuren 1 und 2, wobei der Längsschnitt längs der Schnittlinie II - II in Figur 5b und der Querschnitt längs der Schnittlinie I - I in Figur 5a geführt ist,

Figur 6 eine Seitenansicht einer Ausführungsform eines Umschalters gemäß den Figuren 3 und 4,

Figur 7 eine im Querschnitt gemäß Figur 5b dargestellte Ausführungsform eines Ein-/Ausschalters gemäß den Figuren 1 und 2, bei welcher der Flüssigkeitstropfen durch Erzeugung eines inhomogenene elektrischen Feldes bewegt wird,

Figuren 8a, b, c in drei Schnitten eine Ausführungsform eines Ein-/Ausschalters mit schräg zur Faserachse verlaufendem Koppelspalt, bei der ein Flüssigkeitstropfen unter Ausnutzung sowohl von elektrostatischen als auch von Kapillarkräften bewegt wird, wobei Figur 8a einen Schnitt längs der Linie IV - IV in Figur 8b, diese einen Schnitt längs der Schnittlinie III - III in Figur 8a, und Figur 8c einen Schnitt längs der Schnittlinie V - V in Figur 8b darstellen,

Figur 9a, b ähnlich wie in Figur 5a und b, in Längs-und Querschnitt eine Ausführungsform eines Ein-/Ausschalters gemäß den Figuren 1 und 2, bei welcher der magentisierbare Flüssigkeitstropfen magnetisch geschaltet wird,

Figur 10a, b in Längs- und Querschnitt eines Ausführungsform eines magnetisch geschalteten Ein-/Ausschalters gemäß den Figuren 1 und 2, wobei Figur 10a einen Schnitt längs der Linie VII - VII in Figur 10b,und Figur 10b eine Schnitt längs der Linie VI - VI in Figur 10a darstellen,

Figur 11a, b in gleicher Darstellungsart, wie in den Figuren 10a und b eine andere Ausführungsform eines magnetisch geschalteten Ein-/Ausschalters, der wie die Ausführungsform nach den Figuren 8a, b und c einen schräg zur Faserachse verlaufenden Koppelspalt aufweist, der so verläuft, wie es in der in

Figur 11c gezeigten Seitenansicht der beiden rechten Fasern in der Figur 11b dargestellt ist,

Figur 12 die wesentlichen Teile einer Ausführungsform eines Ein-/Ausschalters gemäß den Figuren 1 und 2, bei dem in dem Koppelspalt eine elektrochrome Anordnung mit einem Elektrolyten zwischen Elektroden angeordnet ist,

Figur 13 eine modifizierte Ausführungsform eines Ein-/Ausschalters nach Figur 12, bei der anstelle der elektrochromen Anordnung eine Flüssigkristallanordnung im Koppelspalt angeordnet ist,

Figur 14 und 15 jeweils eine Ausführungsform eines Umschalters nach den Figuren 3 und 4, bei der in dem schräg zur Faserachse verlaufenden Koppelspalt, wie bei der Ausführungsform gemäß Figur 12 bzw. 13 eine elektrochrome Anordung bzw. Flüssigkristallanordnung angeordnet ist, und

Figur 16 schematisch eine Reflexionskurve eines bei der Ausführungsform nach Figur 15 verwendeten Flüssigkristalls auf Cholesterinbasis.

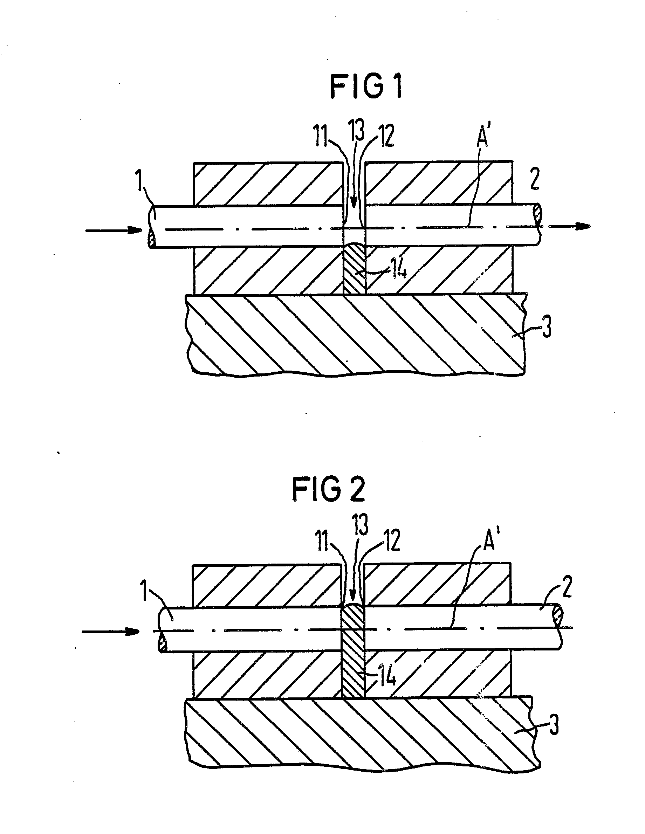

Bei dem in den Figuren 1 und 2 dargestellten Ein-/Ausschalter sind auf einem Trägerkörper 3 zwei in Führungsnuten eingelegte koaxiale Glasfasern 1 und 2 über ihre Endflächen 11 und 12 auf Stoß gekoppelt, wobei ein kleiner Koppelspalt 13 von etwa 10 bis 100 μm Breite freigehalten wird. Die den Koppelspalt 13 begrenzenden Endflächen 11 und 12 verlaufen senkrecht zur gemeinsamen Faserachse $A'$. Die Führungsnuten können beispielsweise in Planartechnik durch Vorzugsätzen oder anisotropes Ätzen in Silizium hergestellt werden. Das bewegliche Schaltelement umfaßt eine möglichst start lichtabsorbierende Flüssigkeit 14, die wahlweise in den Koppelspalt 13 zwischen den Fasern 1 und 2 einzubringen und aus ihm wieder herauszubringen ist.

In dem Schaltzustand gemäß Figur 1 ist die Flüssigkeit 14 nicht in den Koppelspalt 13 eingebracht und es besteht somit ein optischer Kontakt zwischen den Fasern 1 und 2. Dies bedeutet, daß der Ein-/Ausschalter eingeschaltet ist.

In dem Schaltzustand gemäß Figur 2 ist die Flüssigkeit 14 in den Koppelspalt 13 zwischen den Fasern 1 und 2 eingebracht, und der optische Kontakt zwischen den Fasern 1 und 2 ist somit unterbrochen. Der Ein-/Ausschalter befindet sich im ausgeschalteten Zustand.

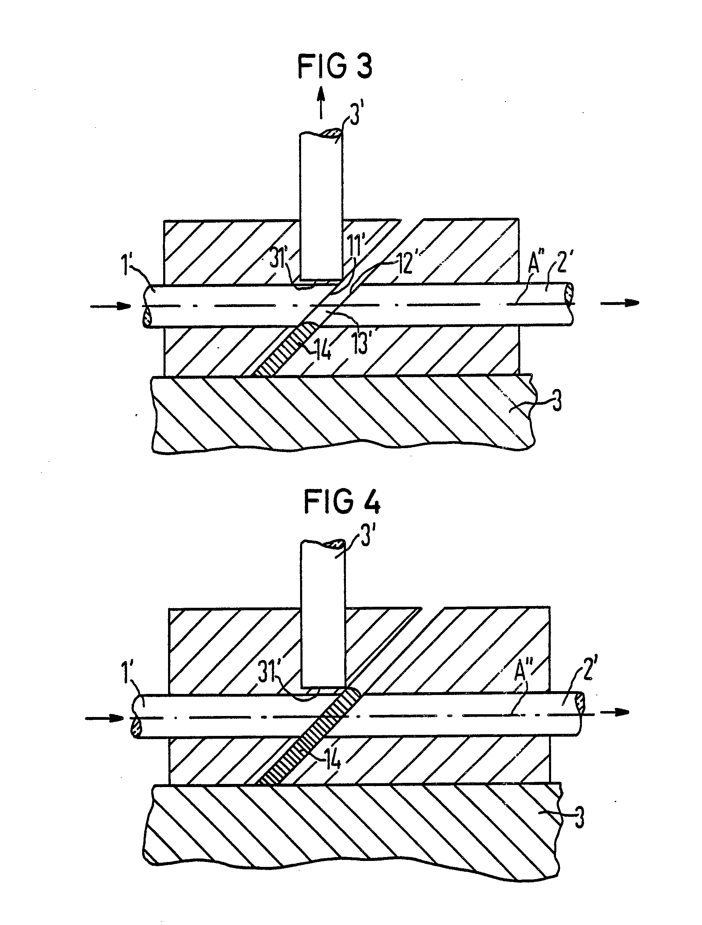

Bei dem in den Figuren 3 und 4 dargestellten Umschalter sind wie bei dem Schalter nach den Figuren 1 und 2 auf einem Trägerkörper 3 zwei koaxiale Fasern $1'$ und $2'$ in Führungsnuten eingelegt und über ihre Endflächen $11'$ und $12'$ auf Stoß gekoppelt, wobei ein kleiner Spalt $13'$ von beispielsweise 10 bis 100 μm freigehalten wird. Im Unterschied zu dem Schalter nach den Figuren 1 und 2 sind die den Koppelspalt $13'$ begrenzenden Endflächen $11'$ und $12'$ im Winkel von 45° zur gemeinsamen Faserachse $A''$ geneigt. Außerdem endet bei dem Koppelspalt $13'$ eine senkrecht zur Achse $A''$ verlaufende weitere Glasfaser derart, daß an der Endfläche $11'$ der Faser $1'$ reflektiertes Licht in die weitere Faser $3'$ eingekoppelt wird. Das bewegliche Schaltelement umfaßt eine immertierende, möglichst transparente Flüssigketi 14, die wahlweise in den Spalt $13'$ zwischen den Fasern $1'$ und $2'$ einzubringen und aus ihm wieder herauszubringen ist.

In dem Schaltzustand gemäß Figur 3 ist die immertierende Flüssigkeit 14 nicht in den Luftspalt $13'$ eingebracht und es besteht kein optischer Kontakt zwischen den Fasern $1'$ und $2'$. Dagegen besteht aber ein optischer Kontakt zwischen der Faser $1'$ und der Faser $3'$. Licht, das in der Faser $1'$ der Endfläche $11'$ zugeführt wird, wird an dieser wegen des Brechungsindexsprunges von Glas zu Luft in Richtung der Faser $3'$ reflektiert und diese über deren Endfläche $31'$ eingekoppelt.

In dem Schaltzustand gemäß Figur 4 ist die immertierende Flüssigkeit 14 in den Spalt $13'$ eingebracht und die Fasern $1'$ und $2'$ befinden sich in optischem Kontakt miteinander, weil der Brechungsindex im Spalt $13'$ jetzt etwa gleich dem der beiden Fasern $1'$ und $2'$ ist und somit an der Endfläche $11'$ keine Totalreflexion mehr stattfinden kann. Dementsprechend gelangt in diesem Schaltzustand auch kein Licht in die Faser $3'$. Zwischen den Fasern $1'$ und $2'$ koppelt dagegen das Licht nahezu verlustfrei über.

Bei beiden Schaltern muß also eine Flüssigkeit in den Koppelspalt gebracht oder aus diesem wieder entfernt werden. Es ist jedoch auch möglich, zwei sich nicht mischende Flüssigkeiten zu verwenden, die unterschiedliche optische Eigenschaften aufweisen, beispielsweise unterschiedliche Brechungsindizes und/oder unterschiedliche Absorption. Vorteilhafterweise kann dazu eine Kombination von Quecksilber und Schwefelsäure verwendet werden. Die Grenzfläche Quecksilber-Schwefelsäure im Koppelspalt läßt sich durch Anlegen einer Spannung verschieben. Auch können in einer Flüssigkeit stark absorbierende oder streuende Teilchen aufgeschwemmt werden, z.B. kleine magnetisierbare Teilchen, die in einem steuerbaren Magnetfeld bewegt werden können.

Vorteilhaft sind Ausführungsformen, bei denen der Spalt zwischen den Fasern ständig mit Flüssigkeit gefüllt bleibt. Der Vorteil dieser Ausführungsformen liegt darin, daß keine Verunreinigungen an den Endflächen der Fasern eintrocknen können und daß zum Umschalten nicht die oft sehr großen Kapillarkräfte überwunden werden müssen.

Die Flüssigkeit kann durch elektrische, magnetische oder mechanische Kräfte im Koppelspalt verschoben werden. Besonders zweckmäßig erscheint die Verwendung elektrisch leitender Flüssigkeiten, auf die eine Kraft durch Stromfluß in einem Magnetfeld oder durch Verändern der Oberflächenspannung bei einer angeregten elektrischen Spannung ausgeübt werden kann.

Dies ist beispielsweise bei einer Kombination von Quecksilber und Schwefelsäure der Fall. Daneben ist aber auch eine Bewegung eines Flüssigkeitstropfens durch Druck oder thermische Ausdehnung möglich. Da das Volumen der Flüssigkeit sehr klein gehalten werden kann, sind auch vernünftige Schaltzeiten möglich.

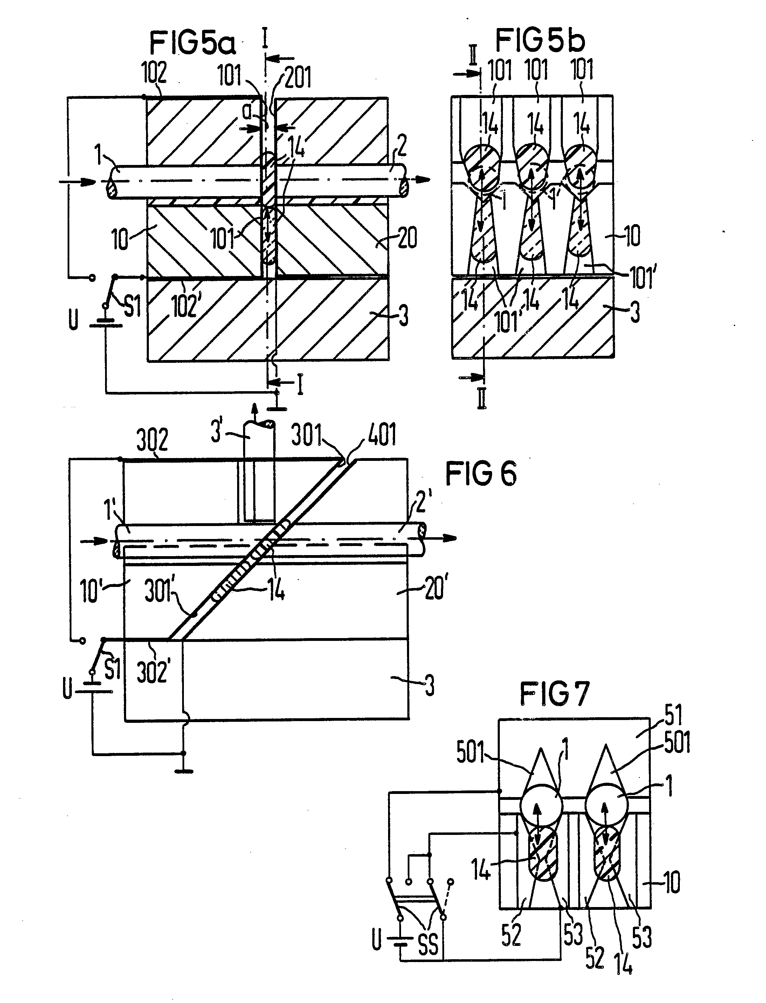

In den Figuren 5a und 5b ist in Seitenansicht und Querschnitt eine Ausführungsform eines Ein-/Ausschaltelements mit mehreren Ein-/Ausschaltern gemäß den Figuren 1 und 2 auf einem gemeinsamen Trägerkörper dargestellt, bei dem die Flüssigkeit der Schalter durch elektrostatische Kräfte bewegt wird.

Diese Ausführungsform kann beispielsweise so hergestellt werden, daß in parallele Führungsnuten in einer Oberfläche eines Substrats, beispielsweise ein Siliziumplättchen mit durch anisotropes Ätzen hergestellten Nuten, Glasfasern eingelegt, mit einem Deckkörper abgedeckt und Substrat und Deckkörper zusammengeklebt werden, wobei der verwendete Kleber oder Kitt den Zwischenraum zwischen Deckkörper und Substrat vorzugsweise vollständig ausfüllt. Der auf diese Weise entstandene Block mit parallelen Fasern wird senkrecht zu den Faserachsen durchtrennt, so daß zwei Blockteile 10 und 20 mit Fasern 1 bzw. 2 entstehen. Die beim Durchtrennen entstehenden Trennflächen auf den Blockteilen 10 und 20 werden zumindest im Bereich der Fasern auf optische Qualität gebracht. Auf die bearbeitete Trennfläche, beispielsweise des Blockteils 20, wird für jede Faser 2 eine Elektrode 201 aufgebracht, die eine für alle Fasern 2 gemeinsame Elektrode sein kann, welche die gesamte Trennfläche bedeckt und lichtdurchlässig ist.

Auf die bearbeitete Trennfläche des Blockteils 10 wird je Faser 1 je ein Elektrodenpaar aufgebracht. Jedes Elektrodenpaar besteht aus einer oberen Elektrode 101 und einer davon getrennten unteren Elektrode 101'.

Die beiden mit Elektroden versehenen Blockteile 10 und 20 werden auf einem Trägerkörper 3 so befestigt, daß die Fasern 1 und 2 beider Blockteile fluchten und zwischen den mit den transparenten Elektroden versehenen Trennflächen ein schmaler Spalt übrigbleibt.

Eine elektrische Verbindungsleitung von einem äußeren Anschluß zu einer Elektrode kann als Streifenleiter ausgebildet sein, der vor dem Aufbringen des betreffenden Blockteils auf den Trägerkörper 3 auf eine Seitenfläche dieses Blockteils aufgebracht wird. Derartige elektrische Verbindungen sind in den Figuren 5a und 5b mit 102 und 102' bezeichnet.

In den Spalt zwischen den Blockteilen 10 und 20 ist pro fluchtendem Faserpaar je ein Flüssigkeitstropfenpaar 14 eingebracht, das aus zwei Flüssigkeiten mit unterschiedlichen Dielektrika besteht, von denen eine durchsichtig und die andere undurchsichtig ist. Zur vertikalen Verschiebung eines jeden Tropfenpaares 14 wird zwischen die obere Elektrode 101 oder die untere Elektrode 101' des zugeordneten Elektrodenpaares auf dem Blockteil 10 und der Elektrode 201 auf dem Blockteil 20 eine Spannung U angelegt. Wird die Spannung U zwischen der oberen Elektrode 101 und dr Elektrode 201 angelegt, wird das Flüssigkeitstropfenpaar in der einen Richtung vertikal verschoben. Wird dagegen die Spannung zwischen der unteren Elektrode 101' und der Elektrode 201 angelegt, wird das Flüssigkeitstropfenpaar in der entgegengesetzten Richtung vertikal verschoben. Es kann auf diese Weise wahlweise der durchsichtige Tropfen oder der undurchsichtige Tropfen zwischen die zugeordneten fluchtenden Fasern 1 und 2 gebracht werden.

In der Ausführungsform gemäß den Figuren 5a und 5b ist die Elektrode 201 auf dem Blockteil 20 beispielsweise geerdet und die Spannung U kann durch einen elektrischen Umschalter S1 wahlweise über die elektrische Leitung 102' an die untere Elektrode 101' oder über die elektrische Leitung 102 an die obere Elektrode 101 angelegt werden.

Wesentlich ist bei Ausführungsformen, bei denen ein Flüssigkeitstropfen durch elektrostatische Kräfte im Spalt zu verschieben ist, daß in dem Spalt auf irgendeine Weise ein elektrisches Feld erzeugt wird. Bei der Ausführungsform gemäß den Figuren 5a und 5b wird dieses elektrische Feld durch Anlegen einer Spannung an beabstandete Elektrode erzeugt, die als Kondensator wirken. Sind die Elektroden so gestaltet, daß ein homogenes Feld erzeugt wird, so ist die Flestärke E dieses Feldes gegeben durch $E = U/a$, wobei U wieder die an die Elektroden angelegte Spannung und a der Abstand zwischen den Elektroden, also im wesentlichen die Spaltbreite bedeuten. Die auf einen Flüssigkeitstropfen ausgeübte Kraft F pro Flächeneinheit A ist dann gegeben durch

$$F/A = \tfrac{1}{2}\,\epsilon_0(\epsilon_r - 1)U^2/a^2$$

wobei $\epsilon_0$ die Dielektrizitätskonstante des Vakuums und $\epsilon_r$ die relative Dielektrizitätskonstante der Flüssigkeit bedeuten.

In der Figur 6 ist eine Seitenansicht einer Ausführungsform eines Umschaltelements mit mehreren Umschaltern gemäß den Figuren 3 und 4 auf einem gemeinsamen Trägerkörper dargestellt, das ähnlich aufgebaut ist wie das Schaltelement nach den Figuren 5a und 5b und bei dem die Flüssigkeit der Schalter ebenfalls durch elektrostatische Kräfte bewegt wird.

Diese Ausführungsform kann ähnlich hergestellt werden, wie die Ausführungsform in den Figuren 5a und 5b. Es ist lediglich ein Deckkörper mit parallelen Fasern 3' zu verwenden, der so auf in parallelen Führungsnuten eines Substrats leigenden Glasfasern aufgesetzt wird, daß je eine Faser 3' des Deckkörpers über je einer Faser des Substrats angeordnet ist und senkrecht dazu verläuft. Dabei kann der Deckkörper ebenso hergestellt werden, wie der im Zusammenhang mit den Figuren 5a und 5b erwähnte Block mit parallelen Fasern. Eine Faserenden enthaltende Seite des Blocks wird zweckmäßigerweise geschliffen und poliert oder anderweitig wenigstens im Bereich der Fasern auf optische Qualität gebracht.

Nachdem der Block mit der bearbeiteten Seite auf die Fasern in den Nuten des Substrats in dr richtigen Weise aufgesetzt und mit dem Substrat verklebt worden ist, wird der so entstandene Block mit den abzweigenden Fasern im Winkel von 45° zu den Achsen der Fasern in den Nuten des Substrats und in unmittelbarer Nähe der abzweitenden Fasern 3' durchtrennt, so daß zwei Blockteile 10' und 20' mit Fasern 1' und abzweigenden Fasern 3' bzw. mit Fasern 2' entstehen. Die beim Durchtrennen entstandenen Trennflächen werden auf optische Qualität gebracht. Auf die bearbeiteten Trennflächen werden wie bei der Ausführungsform nach den Figuren 5a und 5b eine Elektrode 401 und Elektroden paare mit einer oberen Elektrode 301 und einer unteren Elektrode 301', beispielsweise durch Bedampfen mit Metall, aufgebracht und falls erforderlich, auf Seitenflächen eines oder beider Blockteile 10' und 20' Metallstreifen 302 bzw. 302' als elektrische Leitungen.

Die auf diese Weise entstandenen Blockteile werden so auf einem Trägerkörper 3' befestigt, daß die Fasern 1' und 2' in den beiden Blockteilen fluchten und zwischen den sich gegenüberliegenden Trennflächen bzw. Elektroden ein schmaler Spalt verbleibt, in den Flüssigkeitstropfenpaare 14 eingebracht werden, von denen jedes aus einem undurchsichtigen, elektrisch nicht leitenden Tropfen und einem an diesen ober- oder unterhalb angrenzenden durchsichtigen, elektrisch nicht leitenden Tropfen besteht. Durch Anlegen einer Spannung zwischen einer oberen Elektrode 301 und der Elektrode 401 oder zwischen einer unteren Elektrode 301' und der Elektrode 401 kann wahlweise der undurchsichtige Tropfen oder der durchsichtige Tropfen zwischen zwei fluchtenden Fasern 1' und 2' gebracht werden. Dazu wird die Elektrode 401 vorzugsweise wieder geerdet und über einen elektrischen Umschalter S1' wahlweise eine Spannung U an eine obere Elektrode 301 über eine Leitung 302 oder an eine untere Elektrode 301' über eine Leitung 302' angelegt wird.

In der Figur 7 ist in einem der Figur 5b entsprechenden Querschnitt eine Ausführungsform eines Ein-/Ausschaltelements gemäß den Figuren 5a und 5b dargestellt, die eine andersartige Elektrodenstruktur aufweist und in deren Spalt nur ein einziger Flüssigkeitstropfen 14 je Faser 1 eingebracht ist. Die Elektroden sind bei dieser Ausführungsform nur auf einer Seite des Spaltes angebracht.

Die Elektroden sind so geformt und geschaltet, daß ein inhomogenes elektrostatisches Feld entsteht, in dessen Bereich der höchsten Feldstärke der Flüssigkeitstropfen gezogen wird.

Speziell bestehen in der Ausführungsform gemäß Figur 7 die Elektroden aus einer oberhalb der Fasern 1 angeordneten oberen Elektroden 51 und aus unterhalb der Fasern 1 angeordneten aus jeweils zwei seitlich nebeneinander angeordneten Elektroden 52 und 53 bestehenden unteren Elektrodenpaaren, von denen jedes je einer Faser 1 zugeordnet ist.

Die obere Elektrode 51 weist je Faser 1 eine nach oben sich verengende speziell dreieckförmig ausgebildete Ausnehmung 501 auf, die über der zugeordneten Faser 1 angeordnet ist.

Die voneinander getrennten Elektroden 52 und 53 eines jeden Elektrodenpaares sind so gestaltet, daß sich der zwischen ihnen und unterhalb dem Paar zugeordneten Faser 1 von dieser nach unten verengt.

Die Elektroden 51, 52 und 53 sind so miteinander verschaltet, daß wahlweise eine Spannung U zwischen der oberen Elektrode 51 und einer unteren Elektrode 53 eines jeden Elektrodenpaares oder zwischen den Elektroden 52 und 53 eines jeden Elektrodenpaares selbst anlegbar ist. Die Umschaltung kann beispielsweise über einen aus zwei miteinander gekoppelten Einzelschaltern bestehenden Doppelschaltern SS erfolgen. In jedem der beiden Fälle wird zwischen Elektroden ein inhomogenes elektrostatisches Feld erzeugt, wobei im einen Fall ein Bereich höchster Feldstärke oberhalb einer Faser 1 und im anderen Fall unterhalb der Faser vorhanden ist. Ein im Bereich der Faser 1 befindlicher Flüssigkeitstropfen 14 oder ein entsprechendes Tropfenpaar wird zu diesen Bereichen höchster Feldstärke hingezogen und damit wahlweise nach oben oder unten bewegt.

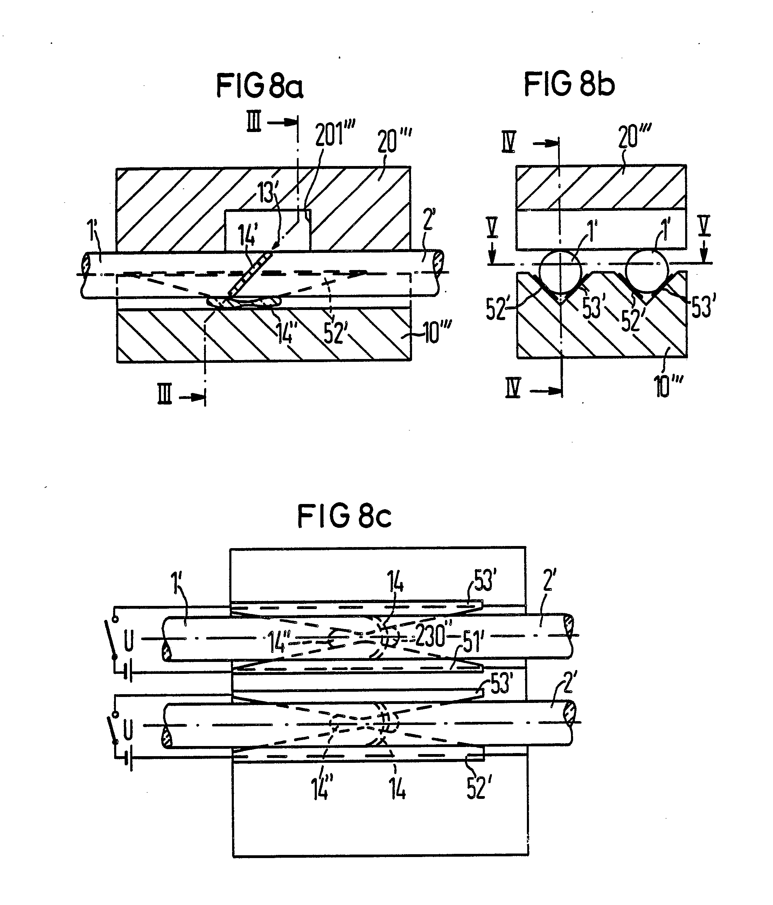

Bei den Ausführungsformen gemäß den Figuren 5a bis Figur 7 wird durch Umschalten einer Spannung auf unterschiedliche Elektroden eine Verschiebung des Flüssigkeitstropfens erreicht. In den Figuren 8a, b und c ist dagegen eine Ausführungsform dargestellt, bei der sowohl elektrostatische Kräfte als auch Kapillarkräfte ausgenutzt werden.

Bei dieser Ausführungsform sind Fasern 1' in einem mit V-förmigen Nuten versehenen Nuten eines Trägerkörpers 10''' gehalten und von einem Deckkörper 20''' abgedeckt. Jede Faser ist durch einen Koppelspalt 13' in zwei getrennte Faserhälften unterteilt. Im Bereich dieses Spaltes weist der Deckkörper 20''' einen zur Faser hin offenen Hohlraum 201''' auf. In jeder V-förmigen Führungsnut ist ein Elektrodenpaar mit auf den beiden Seitenwänden der Nut aufgebrachten Elektroden 52' und 53' angeordnet, auf denen die in der Nut befestigte Faser 1''' aufliegt. Die Elektroden 52' und 53 eines jeden Elektrodenpaares sind so geformt, daß der Zwischenraum zwischen ihnen im Bereich oder in der Nähe des vorzugsweise im Winkel von 45° zur Faserachse geneigten Koppelspaltes 13' eine engste Stelle aufweist. Beispielsweise können die Elektroden annähernd ein Dreieck mit einer zur Bodenkante der V-förmigen Nut und damit nach unten weisenden Spitze sein. Durch Anlegen einer elektrischen Spannung U zwischen die Elektroden 52' und 53' eines Elektrodenpaares wird ein inhomogenes elektrostatisches Feld erzeugt, dessen Bereich größter Feldstärke an der engsten Stelle des Zwischenraumes zwischen den Elektroden liegt. Dieser Bereich liegt auch unterhalb der betreffen den Faser 1' und der Flüssigkeitstropfen 14 wird in diesen Bereich gezogen und sammelt sich in einem vorhandenen Zwischenraum zwischen der Faser und der Bodenkante der Nut. Wird die Spannung und damit das elektrostatische Feld fortgenommen, so wird die unter der Faser gesammelte Flüssigkeit durch Kapillarkräfte in den Koppelspalt gezogen und dringt zum geringen Teil auch in den darüberliegenden Hohlraum 201''' ein.

Da die elektrostatischen Kräfte im allgemeinen klein sind gegenüber den Kapillarkräften, muß durch eine Oberflächenbehandlung der Faser die Adhäsion verringert werden, oder eine Kombination von zwei nicht mischbaren Flüssigkeiten mit unterschiedlichen Dielektrizitätskonstanten und unterschiedlichen optischen Eigenschaften verwendet werden.

In den Figuren 8a und 8c ist die durch das angelegte elektrostatische Feld aus dem Koppelspalt 13' gezogene und unter dem Spalt gesammelte Flüssigkeit mit 14'' bezeichnet.

Im folgenden werden Anordungen beschrieben, bei denen eine magnetisierbare Flüssigkeit bewegt wird.

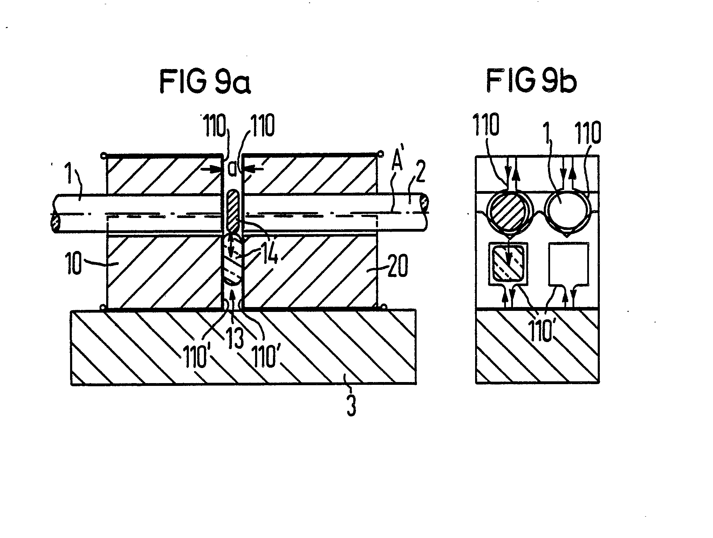

Die Figuren 9a und 9b zeigen in einem axialen Längsschnitt bzw. Querschnitt einen Ein-/Ausschalter. Dieser Schalter ist im wesentlichen genauso aufgebaut wie die elektrostatische Ein-/Ausschalter gemäß den Figuren 5a und 5b und es sind deshalb für übereinstimmende Bauteile die gleichen Bezugszeichen verwendet. Der magnetisch geschaltete Schalter gemäß den Figuren 9a und 9b unterscheidet sich von dem elektrostatisch geschalteten Schalter nur dadurch, daß die auf den Trennflächen der beiden Blockteile 10 und 20 aufgebrachten Elektroden 110, 110' jeweils als eine Leiterschleife des Durchmessers d ausgebildet ist, durch die ein Strom J geschickt werden kann. Die von dem Strom J durchflossene Leiterschleife erzeugt ein im wesentlichen axial ausgerichtetes Magentfeld und die von diesem Magentfeld auf eine magentisierbare Flüssigkeit ausgeübte Kraft pro Flächeneinheit A ist näherungsweise gegeben durch

$$F/A = \frac{1}{2} \mu_0 \mu_r J^2 \frac{a}{d^3}$$

wobei a wieder die Spaltbreite, d den Durchmesser der Leiterschleife und $\mu_o$ $\mu_r$ die absolute bzw. relative Permeabilität bedeuten.

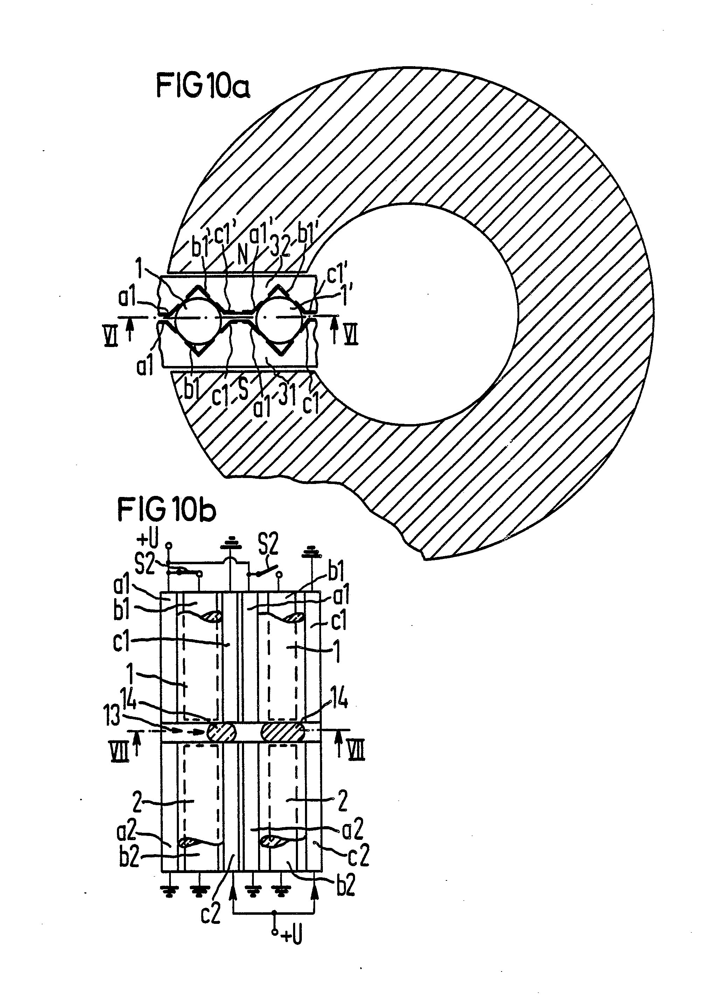

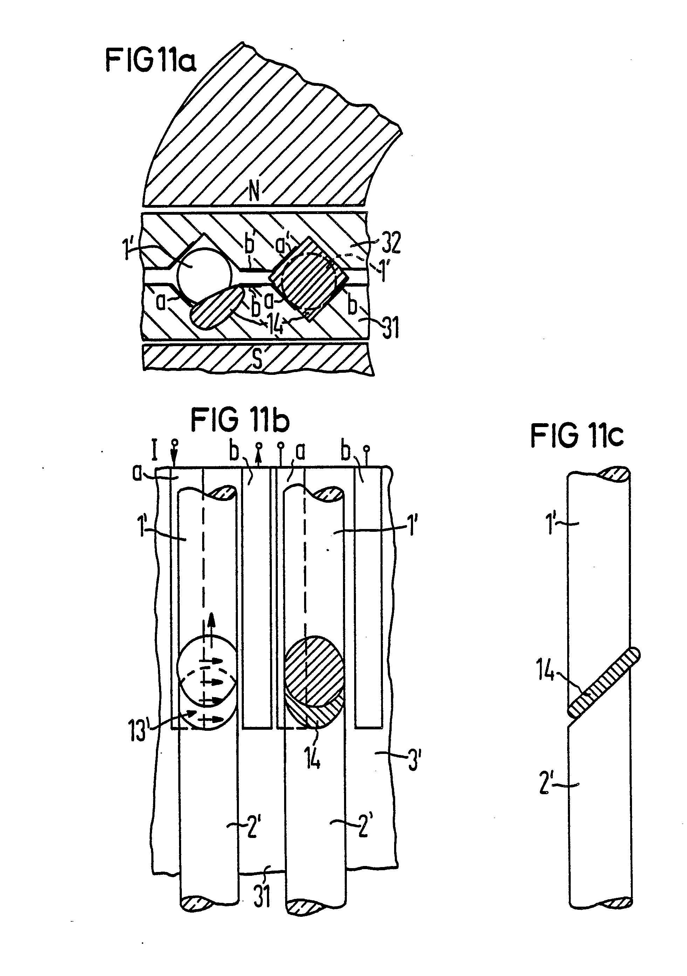

In den Figuren 10a, b und 11a, b und c sind Ausführungsformen von Schaltern dargestellt, bei denen eine leitende Flüssigkeit durch Stromfluß in einem Magentfeld abgelenkt wird. Fließt ein Strom J durch die Flüssigkeit, beispielsweise Quecksilber, so wird in einem Magnetfeld der Feldstärke $\vec{H}$ eine Kraft

$$\vec{F} = \mu_0 J \vec{l} \times \vec{B}$$

auf eine Flüssigkeitssäule der Länge l ausgeübt. In der Formel bedeuten $\vec{l}$ einen in der Richtung ausgerichteten Vektor, in der die Länge der Flüssigkeitssäule gemessen wird und der Betrag dieses Vektors ist durch die Länge l der Flüssigkeitssäule gegeben. $\vec{B}$ bedeutet die magentische Induktion und $\vec{l} \times \vec{B}$ bedeutet das Vektorprodukt zwischen den beiden Vektoren.

Die Figur 10a zeigt einen senkrecht zu Faserachsen und durch einen ebenfalls senkrecht zu den Achsen verlaufenden Koppelspalt zwischen Fasern genommenen Schnitt durch eine erste derartige Ausführungsform, während die Figur 10b einen längs der Schnittlinie VI - VI in Figur 10a geführten Schnitt darstellt. Der Schnitt gemäß Figur 10a ist längs der Schnittlinie VII-VII in der Figur 10b geführt.

In dieser Ausführungsform sind Paare aus fluchtenden Glasfasern 1 und 2, die durch einen Koppelspalt getrennt sind, in V-förmigen Nuten eines Trägerkörpers 31 angeordnet und von einem Deckkörper 32 abgedeckt, der auf seiner, den Trägerkörper 31 zugewandten Seite ebenfalls V-förmige Nuten aufweist, die genau über den Nuten des Trägerkörpers angeordnet sind und parallel dazu verlaufen. Die Faserpaare sind demnach sowohl in den Nuten des Trägerkörpers 31 als auch in den Nuten des Deckkörpers 32 angeordnet.

Die den Faserpaaren zugewandten Seiten sowohl des Trägerkörpers 31 als auch des Deckkörpers 32 sind mit parallel zu den Fasern verlaufenden, streifenförmigen Elektroden belegt, die im Bereich des Koppelspalts unterbrochen sind. Jeder Faser 1 bzw. 2 ist ein mittlerer Elektrodenstreifen b1 bzw. b2 und zwei zu beiden Seiten des mittleren Elektrodenstreifens angeordnete und davon getrennte seitliche Elektrodenstreifen a1 und c1 bzw. a2 und c2 angeordnet. Der mittlere Elektrodenstreifen b1 bzw. b2 ist genau unter der Faser 1 bzw. 2 angeordnet. Die Elektrodenstreifen könnten auch auf dem Deckkörper 32 und nicht auf dem Trägerkörper 31 angeordnet sein. In der dargestellten Ausführungsform sind sowohl auf den Trägerkörper 31 als auch auf dem Deckkörper 32 Elektrodenstreifen aufgebracht, was aus der Figur 10a ersichtlich ist. Dort ist der mittlere Elektrodenstreifen auf dem Deckkörper 31 mit b1$'$ bezeichnet und die beiden seitlichen Elektrodenstreifen sind mit a1$'$ und c1$'$ bezeichnet.

Das ganze Gebilde wird in ein Magentfeld gebracht, das quer zu den Fasern und Elektrodenstreifen und senkrecht zu der Ebene, in der die Fasern angeordnet sind, verläuft. Dies kann dadurch erreicht werden, daß das ganze Gebilde zwischen sich gegenüberliegenden, entgegengesetzte Pole von Dauermagneten oder eines einzigen ringförmigen Dauermagneten gebrach wird, wie es in der Figur 10a gezeigt ist. S bezeichnet den magentischen Südpol und N den Nordpol dieses Dauermagneten.

An die seitlichen Elektrodenstreifen a1 und a1$'$ sowie c2 ist eine positive Spannung U angelegt, während die seitlichen Elektrodenstreifen a2 und a2$'$, die seitlichen Elektrodenstreifen c1 und c1$'$ und auch die mittleren Elektrodenstreifen b2 und b2$'$ auf Masse gelegt sind. An die Elektordenstreifen b1 ist über Schalter S2 wahlweise die Spannung U anlegbar. Es sei darauf hingewiesen, daß diese Verschaltung nur beispielhaft ist.

Wird ein Schalter S2 geschlossen, so schließt sich ein Stromkreis über dem mittleren Elektrodenstreifen b1, einem elektrisch leitenden Flüssigkeitstropfen 14 und dem mittleren Elektrodenstreifen b2.

Aufgrund des Magentfeldes wird die Flüssigkeit nach rechts verschoben, bis die seitlichen Elektrodenstreifen c1 und c1$'$ kurzgeschlossen werden und somit eine entgegengesetzte Kraft auf den Flüssigkeitstropfen 14 ausgeübt wird. Ist der Schalter S2 geöffnet, wie dies bei dem rechten Faserpaar in der Figur 10b der Fall ist, wird der Flüssigkeitstropfen 14 nicht von Strom durchflossen und damit auch nicht bewegt. Sollte der Flüssigkeitstropfen jedoch seitlich wegfließen, so schließt er die seitlichen Elektrodenstreifen a1 und a2 oder c1 und c2 kurz und es wird eine Kraft ausgeübt, die wieder in die Ausgangsposition zurückdrängt.

In den Figuren 11a und 11b ist in gleicher Darstellungsart wie in den Figuren 10a und 10b eine andere Ausführungsform dargestellt. Sie weist beispielsweise ebenfalls einen Trägerkörper 31, einen Deckkörper 32 und einen Dauermagneten auf, wie die Ausführungsform gemäß den Figuren 10a und 10b. Die in den V-förmigen Nuten angeordneten fluchtenden Fasern 1$'$ und 2$'$ sind jedoch wie bei den Ausführungsformen gemäß den Figuren 3 und 4, 6 und 8 durch einen schräg, beispielsweise im Winkel von 45$°$ zur gemeinsamen Achse der fluchtenden Fasern verlaufenden Koppelspalt voneinander getrennt. In der Figur 11c ist dies in einer Seitenansicht der beiden rechten Fasern 1$'$ und 2$'$ in der Figur 11b dargestellt, wobei angenommen ist, daß sich der elektrisch leitende Flüssigkeitstropfen 14, beispielsweise Quecksilber, zwischen den Fasern befindet.

Wie bei der schon beschriebenen Ausführungsform sind auch hier auf den sich gegenüberliegenden Seiten des Trägerkörpers 31 und des Deckkörpers 32 streifenförmige Elektroden aufgebracht, wobei es wiederum prinzipiell genügen würde, derartige Elektroden nur auf einer der beiden Seiten vorzusehen. Im Gegensatz zur vorher beschriebenen Ausführungsform sind bei der hier beschriebenen Ausführungsform je fluchtendes Faserpaar 1$'$, 2$'$ nur zwei parallel zu den Fasern verlaufende streifenförmige Elektroden vorgesehen. Die auf den Trägerkörper 31 aufgebrachten Elektroden sind mit a und b bezeichnet, während die auf den Deckkörper 32 aufgebrachten Elektroden mit a$'$ und b$'$ bezeichnet sind.

Die Elektrode a bzw. a$'$ ist auf einer Seitenfläche der V-förmigen Nut in dem Trägerkörper 31 bzw. dem Deckkörper 32 angebracht und erstreckt sich nicht über den ganzen Querbereich der Fasern 1$'$ und 2$'$. Die andere streifenförmige Elektrode b ist seitlich neben den Fasernpaaren angeordnet. Beide Elektroden a und b erstrecken sich über den gesamten, schräg verlaufenden Spalt zwischen den Elektroden 1$'$ und 2$'$. Analoges gilt für die Elektroden a$'$ und b$'$.

Werden die beiden Elektroden a und b und auch die Elektroden a$'$ und b$'$ durch einen leitenden Flüssigkeitstropfen 14 im Spalt zwischen den Fasern 1$'$ und 2$'$ kurzgeschlossen, so erfolgt, wenn zwischen die Elektroden a und b und auch a$'$ und b$'$ eine Spannung angelegt wird, ein Stromfluß quer zu den Faserachsen, und in folgedessen wird der Flüssigkeitstropfen nach oben oder unten aus dem Koppelspalt herausgedrängt.

Der wesentliche Unterschied zwischen der Ausführungsform gemäß den Figuren 10a und 10b und der Ausführungsform gemäß den Figuren 11a und 11b besteht im wesentlichen also darin, daß bei der erstgenannten Ausführungsform der Stromfluß in Längsrichtung der Fasern erfolgt, während er bei der zweitgenannten quer zur Faserachse erfolgt.

In Versuchen konnte gezeigt werden, daß sich die Grenzfläche zwischen Quecksilber und Schwefelsäure in einer Glaskapillare von etwas 0,1 mm Innendurchmesser bereits bei Anlegen einer Spannung von 5 Volt um etwa 2 mm verschiebt. Die Verschiebung konnte noch bis zu Frequenzen von etwa 1kHz verfolgt werden, obwohl eine etwa 100 mm lange Quecksilbersäule bewegt werden mußte.

Im folgenden werden Schalter beschrieben, bei denen das in den Strahlengang einzubringende Medium auf chemischem Wege volumenmäßig oder mengenmäßig verändert wird oder bei dem die optischen Eigenschaften des eingebrachten Mediums verändert werden.

Ein derartiger Ein-/Ausschalter kann prinzipiell genauso aufgebaut sein, wie der in den Figuren 1 und 2 dargestellte Schalter mit beweglichem Flüssigkeitstropfen. Der dortige Flüssigkeitstropfen 14 ist lediglich durch ein geeignetes Medium zu ersetzen, welches in dem Koppelspalt 13 zwischen den Fasern 1 und 2 stationär angeordnet ist.

Ein Umschalter kann prinzipiell genauso aufgebaut sein, wie der Umschalter gemäß den Figuren 3 und 4 und auch hier ist der Flüssigkeitstropfen 14 durch das geeignete Medium zu ersetzen, welches in den Koppelspalt 13' zwischen den Fasern 1' und 2' stationär anzuordnen ist.

Bis auf die Anordnung des geeigneten Mediums im Koppelspalt kann die Herstellung eines derartigen Ein-/Aus schalters bzw. Umschalters genauso erfolgen, wie bei den bereits beschriebenen Schaltern, d.h. sie können beispielsweise in Planartechnik durch Vorzugsätzen in Silizium hergestellt werden. Auch der Koppelspalt wird vorzugsweise wieder 10$\mu$m bis 100 $\mu$m breit gewählt. Die Wirkungsweise eines derartigen Ein-/Ausschalters oder Umschalters ist die gleiche, wie bei den Schaltern gemäß den Figuren 1 und 2 bzw. 3 und 4. D.h.,daß im Auszustand des Ein-/Ausschalters das in den Koppelspalt eingebrachte geeignete Medium lichtundurchlässig oder zumindest stark lichtabsorbierend oder -streuend sein muß, während es im eingeschalteten Zustand möglichst lichtdurchlässig sein muß. Beim Umschalter muß in dem Fall, daß das Licht in den koaxialen Wellenleiter überkoppeln soll, möglichst stark lichtdurchlässig sein und einen Brechungsindex aufweisen, der in etwa dem Brechungsindex des lichtführenden Bereiches der koaxialen Wellenleiter entspricht. Soll das Licht in die von den koaxialen Wellenleitern abzweigenden Wellenleiter eingekoppelt werden, so muß im Koppelspalt eine Spiegelfläche erzeugt werden, die das in einer der beiden koaxialen Wellenleiter zugeführte Licht in Richtung des abzweigenden Wellenleiters spiegelt.

In der Figur 12 sind die wesentlichen Teile einer ersten Ausführungsform eines Ein-/Ausschalters dargestellt, bei dem im Koppelspalt 13 zwischen den Glasfaser-Lichtwellenleitern, die hier Stufenindexprofilfasern mit jeweils einem Kern 11 bzw. 12 und einem diesen umgebenden Mantel 12 bzw. 22 bestehen, eine elektrochrome Anordnung mit einem Elektrolyten 140, der zwischen zwei Elektroden 121 und 122 angeordnet ist.

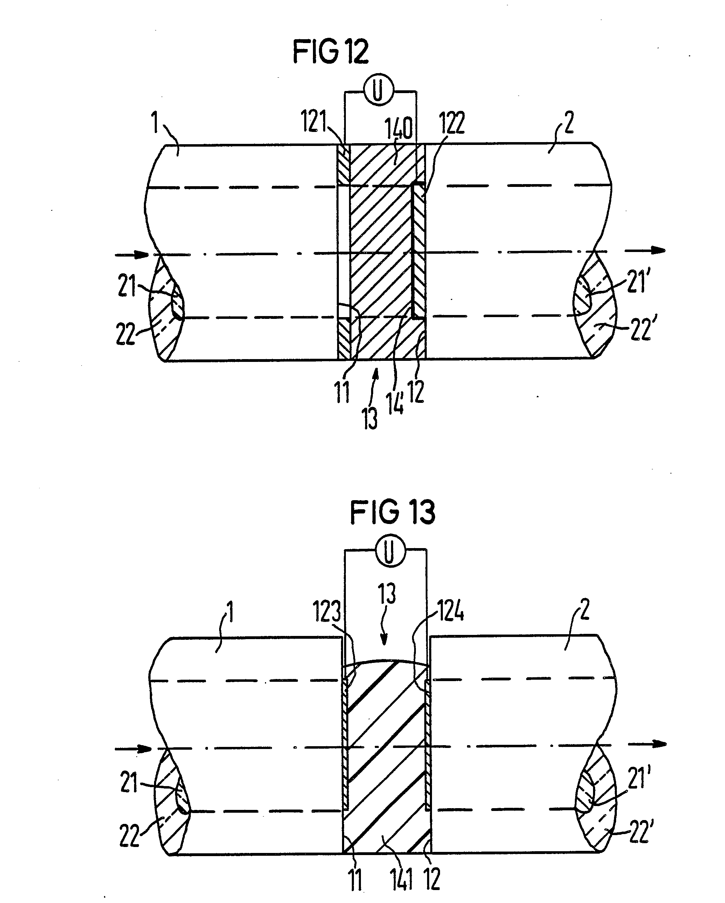

Die beiden Elektroden 121 und 122 sind auf den Faserstirnflächen 11 und 12 aufgebracht, die den Spalt 13 begrenzen. Eine Elektrode, im vorliegenden Fall die Elektrode 122,ist eine transparente Elektrode, die im Bereich des Kerns 22 der Faser 2 angeordnet. Die andere Elektrode 121 ist eine den Kern der Faser 1 umgebende beispielsweise ringförmige Elektrode. Bei Stromdurchgang durch den Elektrolyten 140 verliert die Elektrode 122 durch eine chemische Reaktion ihre ursprüngliche Transparenz. Dieser Effekt wird bereits bei sogenannten elektrochromen Displays angewandt. Die Elektrode 122 besteht z.B. aus transparentem Wolframoxid, das sich bei Stromdurchgang in tiefblaue Wolframsäure ($H_nWO_3$, n = 1, 2) umwandelt. Bei Abschalten des Stromes bleibt die Wolframsäureschicht 14$^+$ erhalten und wandelt sich erst beim Umpolen der Stromrichtung wieder in transparentes $WO_3$ um (siehe dazu RCA Review 36 (1975) 177-197) Bei einer Betriebsspannung von 4 Volt beträgt die Schaltzeit etwa 400 ms (siehe J. Appl. Phys. 50 (1979) 2993-2994, Efficiency and humidity dependence of $WO_3$-isular electrochromic display structures). In der aus Figur 13 in ihren wesentlichen Teilen hervorgehenden Ausführungsform eines Ein-/Ausschalters ist in dem Koppelspalt 13 zwischen den Fasern 1 und 2 ein Flüssigkristall vorhanden, der zwischen transparenten Elektroden 123 und 124 angeordnet ist. Die transparenten Elektroden 123 und 124 sind wieder auf den Stirnflächen 11 und 12 aufgebracht,und zwar im Bereich der Kerne 21 bzw. 21'. Die Elektroden können beispielsweise aus SnO bestehen. Der Flüssigkristall 141 besteht beispielsweise aus einem Flüssigkristall mit eingelagertem, dichroitischem Farbstoff. Liegt zwischen den Elektroden 123 und 124 keine Spannung an, so absorbiert der Farbstoff das Licht. Wird eine bestimmte Spannung angelegt, richten sich die Farbpartikel im elektrischen Feld auf, so daß die Polarisationsrichtungen des Lichts und der Farbstoffmoleküle aufeinander senkrecht stehen (siehe Applications of Liquid Crystals, Springer-Verlag, Berlin, Heidelberg, New York).

Das Licht wird nun nicht mehr absorbiert und kann den Flüssigkristall 141 durchqueren und damit von einer Faser in die andere überkoppeln. Verwendet man Farbstoffpartikel mit einem magnetischen Dipolmoment, so kann die Ausrichtung der Farbstoffmoleküle auch durch ein Magnetfeld erfolgen (siehe Applications of Liquid Crystals, Springer-Verlag, Berlin Heidelberg, New York). Es wären dann keine Elektroden im Kernbereich der Faserstirnflächen 11 und 12 nötig.

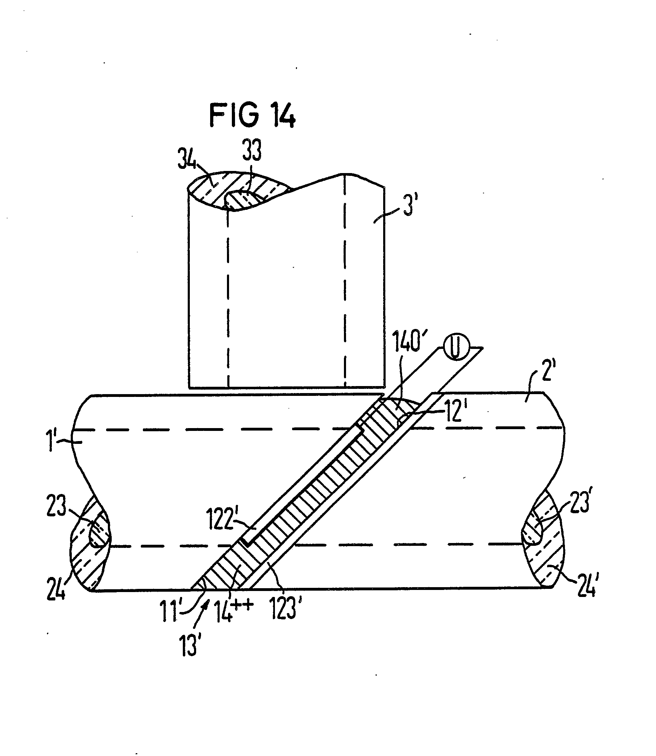

In der Figur 14 ist eine erste Ausführungsform eines Umschalters in seinen wesentlichen Teilen dargestellt.

In dem im Winkel von 45° zur Achse verlaufenden Koppelspalt 13 zwischen den koaxialen Fasern 1' und 2' ist ein Elektrolyt 140' vorhanden. Die beiden koaxialen Fasern 1' und 2' sind Stufenindexprofilfasern mit einem Kern 23 bzw. 23' und einem diesen umgebenden Mantel 24 bzw. 24'. Auch die abzweigende Faser 3' ist eine Faser mit einem Kern 33 und einem Mantel 34.

Der Elektrolyt 140' ist zwischen zwei Elektroden angeordnet, von denen eine, die Elektrode 122', auf der Stirnfläche 11' der Faser 1' im Bereich des Kernes 23 angeordnet und transparent ist. Die andere Elektrode 121 ist eine auf die Stirnfläche 12' der Faser 2' aufgebrachte ringförmige Elektrode, die den Kern 23' umgibt.

Beim Anlegen einer Spannung zwischen den Elektroden 122' und 123' scheidet sich aus dem Elektrolyten 140' eine reflektierende Schicht 14++, beispielsweise eine Silberschicht, an der Elektrode 122' ab, so daß von der Faser 1' zugeführtes Licht in die Faser 3' reflektiert wird. Nach einem Umpolen der Spannung geht diese Schicht wieder in Lösung und das Licht kann wieder zur Faser 2' gelangen.

Der Schaltvorgang kann auch durch Umwandlung der Elektrode 122' von transparent in reflektierend, ähnlich wie bei elektrochromen Elektroden, erfolgen.

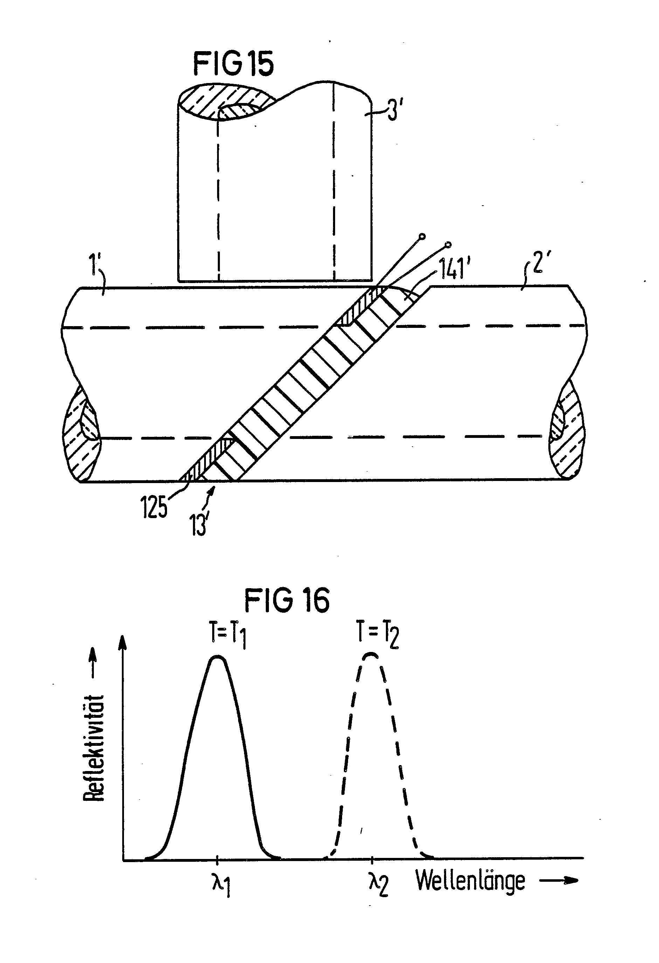

Bei der in der Figur 15 dargestellten Ausführungsform eines Umschalters befindet sich im Spalt 13' zwischen den Fasern 1' und 2' ein Medium 141', das Licht einer bestimmten Wellenlänge $\lambda_1$ selektiv reflektiert. Die Lichtwellenlänge $\lambda_1$, bei der das Medium reflektierend wirkt, ist über die Temperatur oder eine angelegte elektrische Spannung einstellbar. Solche Eigenschaften weisen beispielsweise Flüssigkristalle auf Cholesterinbasis (siehe Applications of Liquid Crystals, Springer-Verlag; IEEE Trans.Electr. Devices ED-15 (1968) 896-906). auf. Die Figur 16 zeigt schematisch die Reflexionskurve eines derartigen Flüssigkristalls bei zwei verschiedenen Temperaturen (siehe Applications of Liquid Crystals, Springer-Verlag, Berlin, Heidelberg, New York). Bei der Temperatur $T_1$ wird das Licht der Wellenlänge $\lambda_1$ in die Faser 3' reflektiert. Wird die Temperatur durch einen kleinen, vorzugsweise ringförmig ausgebildeten Heizwiderstand 125, beispielsweise ähnlich wie in einem Thermoducker erhöht, so wird der Flüssigkristall für die Wellenlänge $\lambda_1$ transparent und das Licht wird in die Faser 2' umgeschaltet. Stellt man eine Temperatur $T_2$ ein, bei der die Wellenlänge $\lambda_2$ reflektiert wird, so kann Licht der Wellenlänge $\lambda_2$ auf die Faser 3 geschaltet werden. Es kann somit bei Wellenlängenmultiplexbetrieb selektiv Licht mit unterschiedlichen Wellenlängen ausgekoppelt werden.

Die Änderung der Mittenfrequenz der Reflexionsbandbreite kann auch über eine elektrische Spannung erfolgen (siehe IEEE Trans. Electr. Devices ED-15 (1968) 896-906). Die Mittenfrequenz ohne angelegte Spannung ist über das Mischungsverhältnis verschiedener Cholesterin komponenten einstellbar. Die Abstimmspannung liegt zwischen 0,5 V/nm und 1 V/nm. Eine experimentell erreichte Schaltfrequenz lag bei einigen hundert kHz.

Schalter nach den vorstehend veschriebenen Prinzipien können in zeilenförmiger Anordnung für faseroptische Displays oder zum "Schreiben" des Ladungsbildes auf der Halbleitertrommel in Laserdruckern eingesetzt werden.

Die Ausführungsform nach Figur 2 oder 4 mit einem im Spalt angeordneten Flüssigkristall auf Cholesterinbasis kann auch als billiger Temperatursensor für Warn- und Kontrollzwecke eingesetzt werden. Bei Überschreiten der Schwellentemperatur $T_1$ wird Licht der Wellenlänge $\lambda_1$ nicht mehr durchgelassen, was am Ende der Faserstrecke mit einem Detektor gemessen werden kann.

**Ansprüche**

1. Optische Steuervorrichtung zum Steuern der in einem optischen Wellenleiter geführten Strahlung, **gekennzeichnet durch** ein in dem Strahlengang einer aus einem oder/und in einen optischen Wellenleiter (1, 2; 1' 2') aus- bzw. eintretenden Strahlung erzeugbares Medium (141, 141'), das aus einem gesteuert erzeugbaren und zum Verschwinden bringbaren absorbierenden oder reflektierenden Stoff besteht oder/und dessen optischen Transmissionsverhalten elektrisch, magnetisch oder thermisch steuerbar ist.

2. Vorrichtung nach Anspruch 1, **dadurch gekennzeichnet,** daß das Medium aus einer aus einem Elektrolyten elektrochemisch abscheidbaren und wieder abtragbaren Schicht besteht.

3. Vorrichtung nach Anspruch 2, **dadurch gekennzeichnet,** daß die elektrochemisch erzeugbare Schicht aus einer elektrochromen Schicht besteht.

4. Vorrichtung nach einem der vorhergehenden Ansprüche, **dadurch gekennzeichnet,** daß das Medium aus einem Flüssigkristall mit dichroitischem Farbstoff besteht.

5. Vorrichtung nach Anspruch 4, **dadurch gekennzeichnet,** daß der Flüssigkristall aus einem durch Erwärmen veränderbaren Flüssigkristall auf Cholesterinbasis besteht.

6. Vorrichtung nach Anspruch 4 oder 5, **gekennzeichnet durch** einen fluchtende optische Wellenleiter (1, 2) voneinander trennenden Spalt (13, 13'), in dem eine Flüssigkristallanordnung (141, 123, 124; 141', 125) angeordnet ist.

7. Vorrichtung nach Anspruch 6, **dadurch gekennzeichnet,** daß der zwischen Elektroden (123, 124) der Flüssigkristallanordnung angeordnete Flüssigkristall (141) aus einem Flüssigkristall besteht, dessen optisches Transmissionsverhalten durch eine Spannung an den Elektroden veränderbar ist.

8. Vorrichtung nach Anspruch 6, **dadurch gekennzeichnet,** daß die Flüssigkristallanordnung aus einem Heizwiderstand (125) und einem Flüssigkristall (141') auf Cholesterinbasis besteht, der durch Erwärmen veränderbar ist.

9. Vorrichtung nach einem der Ansprüche 4 bis 8, **dadurch gekennzeichnet,** daß der Spalt (13) senkrecht zur Achse (A') der fluchtenden Lichtwellenleiter (1, 2) angeordnet ist.

10. Vorrichtung nach einem der Ansprüche 4 bis 8, **dadurch gekennzeichnet,** daß der Spalt (13') schräg zur Achse (A") der fluchtenden Wellenleiter (1', 2') angeordnet ist.

11. Vorrichtung nach Anspruch 10, **dadurch gekennzeichnet,** daß wenigstens ein dritter Lichtwellenleiter (3') vorhanden ist, der in der Nähe des schrägen Spaltes (13') derart endet, daß von einer den Spalt (13') begrenzenden Stirnfläche (11') eines (1') der fluchtenden Wellenleiter (1', 2') seitlich herausreflektiertes Licht in den dritten Wellenleiter (3') einkoppelbar ist.

## FIG 1

## FIG 2

# FIG 3

# FIG 4

FIG5a

FIG5b

FIG 6

FIG 7

# FIG 8a

# FIG 8b

# FIG 8c

FIG 9a

FIG 9b

FIG 10a

b1' c1'   N   a1'  32  b1'
1         c1'
a1        1'
VI ↑      ↑ VI
a1
b1   c1·S   a1·31  c1

FIG 10b

+U   S2
S2
a1        b1
b1        a1
c1        c1
          1
1
13 14     14
VII ↑     ↑ VII
2         2
a2        a2
b2        c2
          b2
c2
+U

EP 0 306 604 A1

FIG 11a

FIG 11b

FIG 11c

## FIG 12

## FIG 13

EP 0 306 604 A1

FIG 14

# FIG 15

# FIG 16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | IBM TECHNICAL DISCLOSURE BULLETIN, Band 24, Nr. 3, August 1981, Seiten 1493-1495, New York, US; F. GFELLER: "Bypass switch for optical fiber ring network" * Insgesamt * | 1 | G 02 B 26/02 G 02 F 1/29 G 02 F 1/17 G 02 F 1/01 |
| X | EP-A-0 025 097 (IBM) * Ansprüche 1-7; Figuren * | 1 | |
| A | US-A-4 240 693 (L.F. JOHNSON) * Zusammenfassung; Figuren * | 2 | |
| A | US-A-4 245 883 (L.F. JOHNSON) * Zusammenfassung; Figuren * | 3,10,11 | |
| A | US-A-3 909 113 (L.B. STOTTS) * Ansprüche; Figuren * | 4,9 | |
| A | DE-A-2 810 715 (SCHALTBAU) * Ansprüche * | 6,7,9 | RECHERCHIERTE SACHGEBIETE (Int. Cl.4) |
| A | GB-A-1 506 256 (S.T.C.) * Ansprüche * | 5 | G 02 B G 02 F |
| A | DE-A-3 006 830 (TEKADE) * Ansprüche * | 1,10,11 | |

Der vorliegende Recherchenbericht wurde für alle Patentansprüche erstellt

| Recherchenort | Abschlußdatum der Recherche | Prüfer |
|---|---|---|
| DEN HAAG | 29-12-1988 | PFAHLER R. |

EPO FORM 1503 03.82 (P0403)